# EUROPEAN PATENT SPECIFICATION

(11) **EP 4 410 136 B1**
(45) Date of publication and mention of the grant of the patent: **18.06.2025**
(21) Application number: 23220286.1
(22) Date of filing: 27.12.2023
(51) Int. Cl.: B65G 54/02, A24F 40/70

(54) **ARTICLE PRODUCTION METHOD AND MACHINE**
VERFAHREN UND MASCHINE ZUR HERSTELLUNG VON ARTIKELN
PROCÉDÉ ET MACHINE DE PRODUCTION D'ARTICLE

(30) Priority: 03.02.2023 IT 202300001785
(43) Date of publication of application: 07.08.2024
(73) Proprietor: G.D S.p.A., 40133 Bologna (IT)
(72) Inventor: MARSILI, Davide, 40133 Bologna (IT); GROSSO, Daniele, 40133 Bologna (IT); DONATI, Stefano, 40133 Bologna (IT); MAGHERINI, Giada, 40133 Bologna (IT); TESTONI, Luca, 40133 Bologna (IT)
(74) Representative: Studio Torta S.p.A.

(56) References cited:
- WO-A1-2023/002427
- CN-B- 107 846 978
- IT-A1- 202000 003 958
- US-A1- 2019 246 697
- US-A1- 2023 091 368

## Description

### TECHNICAL FIELD

The invention relates to an article production method and machine.

The invention is advantageously applied in the tobacco industry to assemble a transponder to be used in a disposable cartridge of an electronic cigarette, to which explicit reference will be made in the description below without because of this losing in generality.

### PRIOR ART

An electronic cigarette normally comprises a re-usable part, which is used several times and contains, among other things, an electric battery (which provides the power needed for the operation of the electronic cigarette) and an electronic processor, which controls the operation of the electronic cigarette. Furthermore, the electronic cigarette comprises a disposable cartridge (namely to be used one single time and to be then replaced), which is coupled to the re-usable part.

Recently, a disposable cartridge was developed, which is provided with a transponder equipped with a memory where the features of the disposable cartridge are stored, particular the features of the (liquid or solid) active substance that is heated in order to release the vapours to be inhaled; in this way, the re-usable part of the electronic cigarette can read the features of the disposable cartridge coupled thereto, accordingly adjusting the heating to the features of the disposable cartridge.

In most applications, the transponder comprises one single wound antenna (namely, one single coil serving as antenna); however, in some applications, the transponder can comprise a plurality of wound antennas (namely, a plurality of coils serving as antennas), which have different spatial orientations so as to make sure that the transponder is capable of effectively communicating in all possible positions.

An automatic machine for manufacturing a disposable cartridge of an electronic cigarette comprises a conveyor, which conveys, along a processing path, a series of carriages, each supporting at least one seat configured to accommodate a support body. The processing path extends between a loading station, in which a support body to be processed is supplied to a seat of a carriage standing still in the loading station, and an unloading station, in which a processed support body is removed from a seat of a carriage standing still in the unloading station. In the area of the loading station there is a supplying device, which cyclically inserts the support bodies into the seats of corresponding carriages standing still in the loading station. During every work cycle, a carriage stops in the loading station to receive a support body and then move on, during the following work cycle, to following stations. It can happen that, during a work cycle, the supplying device of the loading station fails to supply a support body and, hence, the carriage that, in that work cycle, is in the loading station moves on empty (namely, without the support body) to the following stations.

Handling an empty carriage (namely, without the support body) generally is fairly complicated, in particular when the operations in the stations following the supply of the support body to the carriage involve the interaction with external elements, such as to create undesired situations in the absence of the support body. For instance, these operations can include filling the support body or part of the electronic cigarette with a liquid or solid substance or winding the wire to be used to build an antenna of the transponder. In case of a filling operation, indeed, the absence of the support body in the carriage would involve spilling the product onto the surrounding environment, namely also onto parts of the machine, while the second case would lead to the undesired damaging or breaking of the wire.

Another situation in which the absence of a support body inside the carriage is particularly inconvenient is when the carriage has several seats for several support bodies and only one seat is empty; this situation leads to the rejection of components without defects due to the impossibility of completing, for said components, the production cycle. US 2019/246697 discloses a method of production of a cartridge for an aerosol-generating device, in which components of said aerosol-generating device are loaded into a carriage that is moved between processing stations along a processing path during subsequent operating cycles.

### DESCRIPTION OF THE INVENTION

The object of the invention is to provide an article production method and machine, said method and machine allowing a failed supply of a component to be handled in a simple and effective fashion.

According to the invention, there are provided an article production method and machine according to the appended claims.

The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- figure 1 is a perspective view of a component of a disposable cartridge of an electronic cigarette;
- figure 2 is a schematic view of a machine producing the component of figure 1 and manufactured according to the invention;
- figure 3 is a perspective view, with parts removed for greater clarity, of the machine of figure 2; and
- figure 4 is a perspective view of a carriage of a main conveyor of the machine of figure 2.

### PREFERRED EMBODIMENTS OF THE INVENTION

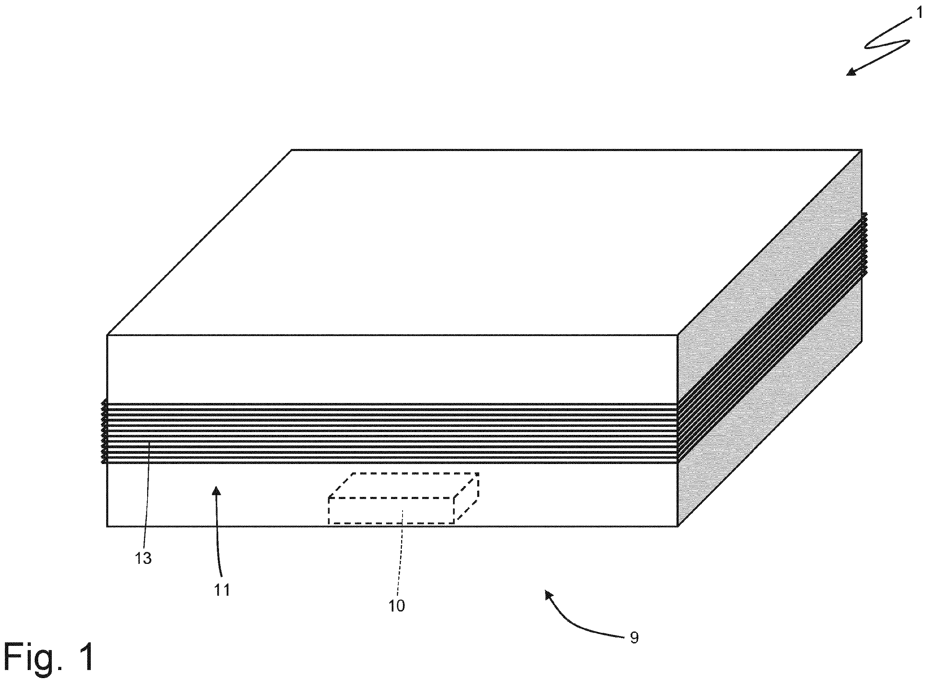

In figure 1, reference number 1 indicates, as a whole, a support body of a component to be used to manufacture a disposable cartridge of an electronic cigarette.

The support body 1 has an approximately parallelepiped-like shape having six walls (faces) and houses a transponder 9, namely an electronic device (of the passive kind, hence without a power supply of its own), which is capable of storing information and is capable of communicating through radio frequency. In other words, the transponder 9 is a small-sized smart label, which is designed to reply to the interrogation made from a distance by suitable fixed or portable apparatuses, known as readers (or interrogator devices); a reader is capable of reading and/or changing the information contained in the transponder 9 being interrogated by communicating with the transponder 9 through radio frequency. As a consequence, the transponder 9 is part of a wireless reading and/or writing system operating according to the so-called RFID ("*Radio-Frequency Identification*") technology.

The transponder 9 comprises an integrated electronic circuit 10 (namely, a microchip) provided with a non-volatile memory (typically, an EEPROM or a FRAM) and a coil 11, which is connected to the electronic circuit 10; in particular, the electronic circuit 10 has two electrical contacts, to which two ends of the coil 11 are welded. The coil 11 is wound and consists of a plurality of turns of an externally insulated conductor wire 13; in the embodiment shown in the accompanying figures there are approximately 10-15 turns. The conductor wire 13 is wound around the side walls of the support body 1, whereas the electronic circuit 10 is arranged in a housing obtained in a lower wall of the support body 1. According to a preferred embodiment, the conductor wire 13 has a diameter ranging from 10 to 500 microns and preferably ranging from 20 to 200 microns (even though, in most applications, the diameter ranges from 25 to 150 microns).

The electronic circuit 10 uses the coil 11 to communicate, through radio frequency, with other electronic devices located nearby. Alternatively or in addition, the electronic circuit 10 could also use the coil 11 to generate power (used for its own operation and/or to charge its own electric battery) exploiting an electromagnetic field generated by an electronic device located nearby; namely, the electronic circuit 10 could also use the coil to carry out an inductive (namely contact-less) power charging of its own electric battery. As a consequence, the coil 11 constitutes an antenna, which can be used to exchange (transmit) information by means of electromagnetic waves (in this case, the antenna is part of a telecommunication device) and/or can be used to exchange power by means of electromagnetic waves (in this case, the antenna is part of a charging device). Namely, the coil 11 constitutes a wound antenna for electromagnetic interactions, which can be aimed at exchanging (transmitting) information or can be aimed at generating electrical power through electromagnetic induction.

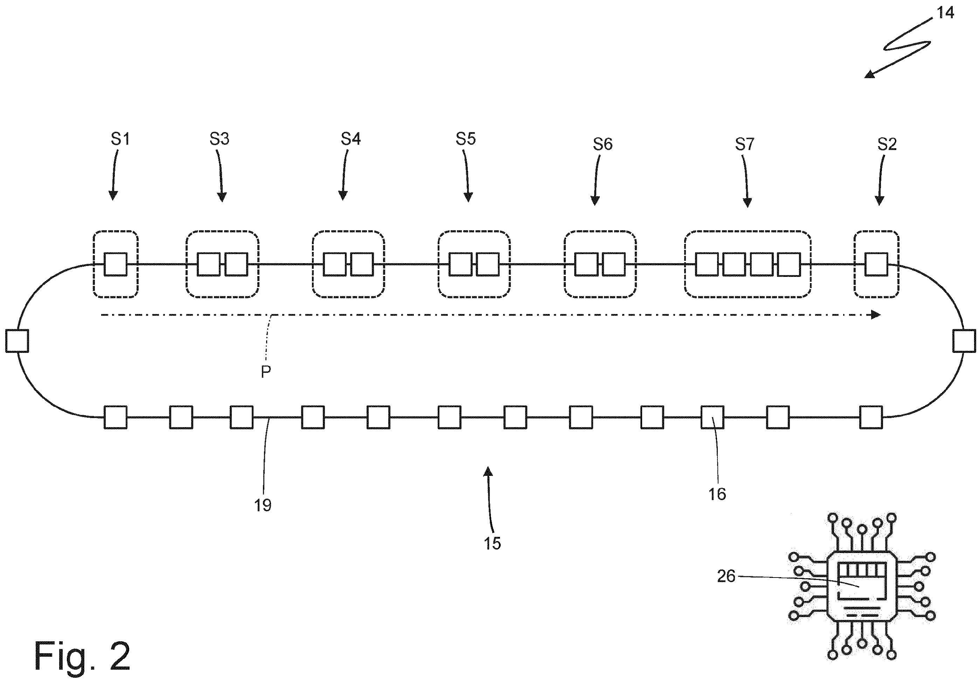

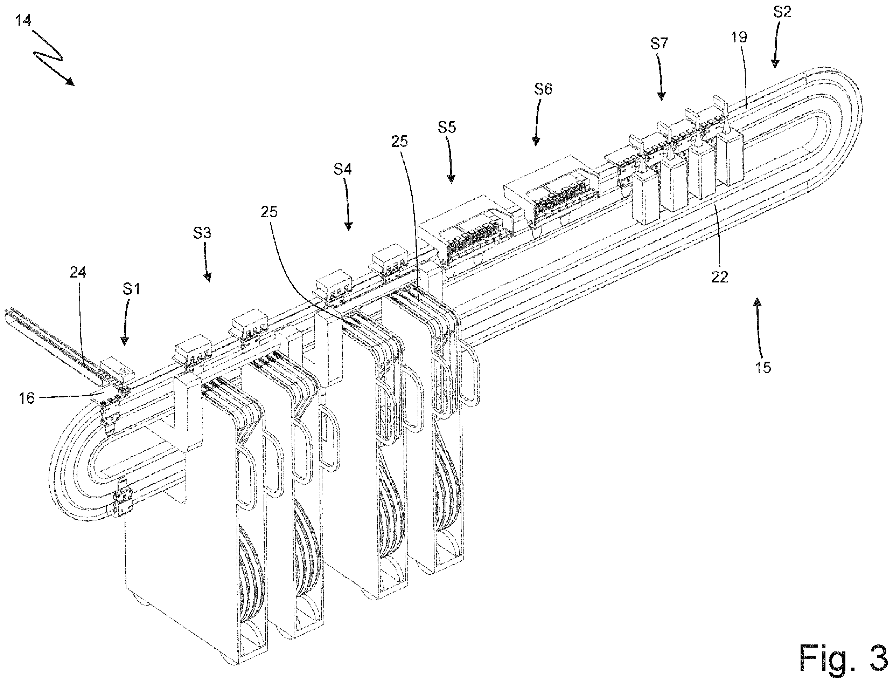

In figures 2 and 3, reference number 14 indicates, as a whole, an automatic machine to assemble the component comprising, among other things, the support body 1 and the transponder 9.

The automatic machine 14 comprises a support frame, which rests on the ground by means of legs and has, at the front, a vertical wall on which the operating members are mounted. Furthermore, the automatic machine 14 comprises a main conveyor 15, which moves the support bodies 1 being processed along a processing path P, which develops between a loading station S1 (where the main conveyor 15 receives the support bodies 1 to be completed, namely assembled) and an output station S2 (where the main conveyor 15 releases complete, namely assembled support bodies 1); in particular, the processing path P is horizontal and linear, namely substantially develops along a straight line arranged horizontally.

The processing path P goes through a series of stations S3-S7 (better described below), where the bodies 1 passing by are subjected to processing operations (in particular, assembling operations).

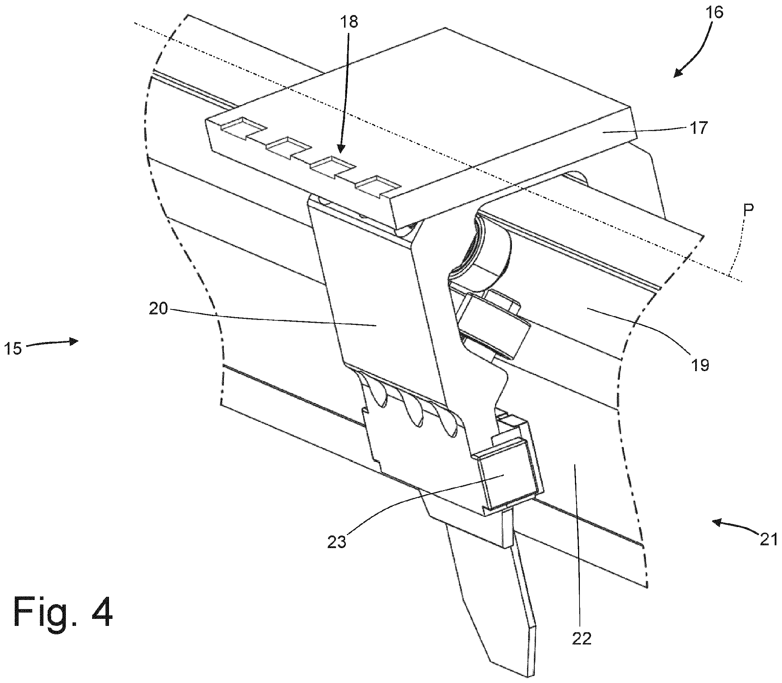

The main conveyor 15 comprises a plurality of carriages 16, which are moved along the processing path P; as better shown in figure 4, each carriage 16 comprises a support plate 17, where four seats 18 are obtained, each designed to receive and house a corresponding support body 1 (namely, each seat 18 reproduces in negative the shape of the support body 1 so as to accommodate the support body 1 without a significant clearance). The number of seats 18 obtained in the support plate 17 of a carriage 16 could obviously be different from four (it generally ranges from a minimum of one to a maximum to seven-eight seats 18).

The main conveyor 15 is normally designed to cyclically move each carriage 16 along the processing path P with an intermittent (step-like) movement, which entails cyclically alternating movement phases, in which the main conveyor 15 moves the carriages 16, and stop phases, in which the main conveyor 15 holds the carriages 16 still. According to figure 4, the main conveyor 15 comprises an annular guide 19 (namely, closed on itself with a ring shape), which is arranged in a fixed position along the processing path P; in particular, the annular guide 19 consists of one single fixed track (namely, without movement), which is arranged along the processing path P. Furthermore, the main conveyor 15 comprises a plurality of slides 20, each supporting a corresponding carriage 16 and being coupled to the guide 19 so as to freely slide along the guide 19. Finally, the main conveyor 15 comprises a linear electric motor 21, which moves the slides 20 carrying the carriages 16 along the processing path P; the linear electric motor 16 comprises an annular stator 22 (namely, a fixed primary element), which is arranged in a fixed position along the guide 19, and a plurality of movable sliders 23 (namely, movable secondary elements), each electrically-magnetically coupled to the stator 22 so as to receive, from the stator 22, a driving force and rigidly connected to a corresponding slide 20.

According to a different embodiment, which is not shown herein, the main conveyor 15 is a conveyor belt and comprises (at least) a flexible belt, which supports the carriages 16 and is closed in a ring shape around at least two end pulleys (at least one of them being motor-driven).

According to figures 2 and 3, at the beginning of the processing cycle, the main conveyor 15 moves a carriage 16 (carrying four seats 18) along the processing path P so as to stop one single carriage 16 in the loading station S1, where four support bodies 1 (to be processed) are placed in the corresponding four seats 18 of the carriage 16.

Subsequently, the main conveyor 15 moves a carriage 16 (carrying four seats 18) along the processing path P and from the loading station S1 to the application station S3 (arranged between the loading station S1 and a loading station S4), where the carriage 16 stops and an adhesive means (for example, one or more glue drops or a double-sided adhesive tape) designed to cause the electronic circuit 10 to stick to the support body 1 is applied on each support body 1 carried by the carriage 16.

Subsequently, the main conveyor 15 moves a carriage 16 (carrying four seats 18) along the processing path P and from the application station S3 to the loading station S4 (arranged downstream of the loading station S1), where the carriage 16 stops and each support body 1 carried by the carriage 16 is coupled to an electronic circuit 10 provided with the two electrical contacts.

Subsequently, the main conveyor 15 moves a carriage 16 (carrying four seats 18) along the processing path P and from the loading station S4 to one of the two winding stations S5 and S6 (arranged one after the other downstream of the loading station S4), where the carriage 16 stops and an externally insulated conductor wire 13 is wound around each support body 1 carried by the carriage 16 in order to create a series of turns making up the wound coil 11. According to a preferred embodiment, each winding station S5 or S6 is configured to operate with two carriages 16 at a time (namely, with eight support bodies 1 at a time), since the winding operation is fairly slow (namely, requires time in order to be carried out with a high quality).

According to a first embodiment, the two winding stations S5 and S6 are redundant twin stations and are used simultaneously (namely, in parallel) or alternatively (so that a winding station S5 or S6 can be used, while the other winding station S6 or S5 is standing still because it needs to be restored/subjected to maintenance/cleaned). When both winding stations S5 and S6 are available (operating), each carriage 16 is stopped in only one of the two winding stations S5 or S6 and, hence, the corresponding coil 11 is coupled (wound) around each support body 1 in the winding station S5 or, alternatively, in the winding station S6; in other words, approximately half the support bodies 1 receive the corresponding coil 11 in the winding station S5, whereas the remaining half of the support bodies 1 receive the corresponding coil 11 in the winding station S6 and, as a consequence, approximately half the carriages 16 stop in the winding station S5, whereas the remaining half of the carriages 16 stops in the winding station S6 (namely, the two winding stations S5 and S6, by operating together and in parallel, split the carriages 16 between themselves).

Subsequently, the main conveyor 15 moves a carriage 16 (carrying four seats 18) along the processing path P and from the winding station S5 and/or S6 to the welding station S7 (arranged downstream of the winding stations S5 and S6), where the carriage 16 stops and, in each support body 1 carried by the carriage 16, the two opposite ends of the wound coil 11 are welded (for example, through ultrasound or through laser) to the two electrical contacts of the electronic circuit 10. According to a preferred embodiment, the welding station S7 is configured to operate with four carriages 16 at a time (namely, with sixteen support bodies 1 at a time), since the welding operation is relatively slow (namely, requires time in order to be carried out with a high quality).

Subsequently, the main conveyor 15 moves a carriage 16 (carrying four seats 18) along the processing path P and from the welding station S7 to the output station S2 (arranged downstream of the welding station S7), where the carriage 16 stops and the support bodies 1 carried by the carriage 16 (and now provided with the respective transponders 9) are removed from the seats 18 so that they can leave the automatic machine 14.

According to a preferred embodiment, each seat 18 of a carriage 16 houses the support body 1 in a projecting manner so that the support body 1 partially protrudes out of the carriage 16 letting a part of a lower wall of the support body 1 (where the electronic circuit 10 with the two electrical contacts has to be placed) free. In the application station S3, the adhesive means is coupled, from the bottom to the top, to the free part of the lower wall of the support body 1.

According to figure 3, the automatic machine 14 comprises a supplying device 24, which is arranged in the area of the loading station S1 and is configured to insert the support bodies 1 into the seats 18, while a carriage 16 is standing still in the loading station S1; according to a preferred embodiment shown in the accompanying figures, the supplying device 24 is capable of supplying one single support body 1 at a time (namely, it operates in a serial manner and not in a parallel manner) and the carriage 16 is moved so as to align, in succession, each seat 18 with the supplying device 24, thus allowing the supplying device 24 to insert, in (quick) succession, four support bodies 1 into the four seats 18 of the carriage 16.

According to figure 3, the automatic machine 14 comprises (at least) a supplying device 25, which is arranged in the area of the loading station S4 and is configured to insert the electronic circuits 10 into the support bodies 1 carried by the seats 18 of a carriage standing still in the loading station S4 (namely, to indirectly insert the electronic circuits 10 into the seats 18 of a carriage standing still in the loading station S4); according to a preferred embodiment shown in the accompanying figures, the supplying device 24 is capable of supplying four electronic circuits 10 at a time (namely, it operates in a parallel manner and not in a serial manner) and the carriage 16 always remains still in the loading station S4 during the simultaneous supply of four electronic circuits 10 at a time into the respective four seats 18. According to a preferred embodiment, in the loading station S4 there are two redundant twin supplying devices 25, which are used alternatively (so that a supplying device 25 can be used while the other supplying device 25 is standing still because it needs to be restored/subjected to maintenance/cleaned) or, if necessary, simultaneously (in order to half the speed with which the supplying devices 25 operate and, hence, increase their supplying precision, though reducing the risk of errors and jamming).

The automatic machine 14 comprises a control unit 26 (schematically shown in figure 2), which controls the operation of the entire automatic machine 14. In particular, the automatic machine 14 operates by means of a succession of operating cycles (also called machine cycles), during each of which the same operations are repeated over and over (obviously, in the absence of unexpected events and faults); in other words, each part of the automatic machine 14 is controlled by the control unit 26 so as to carry out, during each operating cycle, a series of operations that are repeated in the same manner (obviously, in the absence of unexpected events and faults) on different materials (components).

The operation of the automatic machine 14 will be described below, with special reference to the distinctive control modes of the main conveyor 15 in the area of the loading stations S1 and S4.

The control unit 26 controls the main conveyor 15 so as to move, at the beginning of a first operating cycle and along the processing path P, a carriage 16 provided with four empty seats 18 towards the loading station S1 and another carriage 16 provided with four seats 18 containing the respective support bodies 1 towards the loading station S4. Therefore, the control unit 26 controls the main conveyor 15 so as to stop, during the first operating cycle, a carriage 16 in the loading station S1 and the other carriage 16 in the loading station S4. At this point, the control unit 26 controls (in the ways described above) the supplying device 24 so as to insert, during the first operating cycle, four support bodies 1 into the respective four seats 18, while a carriage 16 is standing still in the loading station S1, and controls (in the ways described above) the supplying device 25 so as to insert, during the first operating cycle, four electronic circuits 10 into the respective four seats 18, while another carriage 16 is standing still in the loading station S4.

Subsequently, the control unit 26 should control the main conveyor 15, at the beginning of a second operating cycle immediately following the first operating cycle, so as to move a carriage 16 from the loading station S1 towards the application station S3 (namely, a following station along the processing path P) and so as to move another carriage 16 from the loading station S4 towards the winding station S5 or S6 (namely, a following station along the processing path P).

The control unit 26, at the end of the first operating cycle, checks for the actual presence of four support bodies 1 in the respective four seats 18 of the carriage 16 standing still in the lading station S1 and checks for the actual presence of four electronic circuits 10 in the respective four seats 18 of the carriage 16 standing still in the loading station S4.

The control unit 26, at the beginning of the second operating cycle, moves the carriage 16 from the loading station S1 to the application station S3 (namely, the following station), only if, at the end of the first operating cycle, four support bodies 1 are actually present in the respective four seats 18 of the carriage 16, and moves the carriage 16 from the loading station S4 to the winding station S5 or S6 (namely, the following station), only if, at the end of the first operating cycle, four electronic circuits 10 are actually present in the respective four seats 18 of the carriage 16.

On the other hand, the control unit 26, at the beginning of the second operating cycle, holds the carriage 16 in the loading station S 1, if, at the end of the first operating cycle, at least one seat 18 of the carriage is still empty (namely, without the respective support body 1), and holds the carriage 16 in the loading station S4, if, at the end of the first operating cycle, at least one seat 18 of the carriage is still empty (namely, without the respective electronic circuit 10).

The control unit 26 controls (in the ways described above) the supplying device 24 so as to insert, during the second operating cycle, the missing support bodies 1 into the respective four seats 18, while a carriage 16 is still standing still in the loading station S1 (because it was held still, since the supply of the support bodies 1 was not completed during the preceding operating cycle), and controls (in the ways described above) the supplying device 25 so as to insert, during the second operating cycle, the missing electronic circuits 10 into the respective four seats 18, while another carriage 16 is still standing still in the loading station S4 (because it was held still, since the supply of the electronic circuits 10 was not completed during the preceding operating cycle).

The process disclosed above, namely the one involving checking for the complete supply of the support bodies 1 and of the electronic circuits 10 before allowing the carriages to be transferred from the loading stations S1 and S4 to the following stations, is repeated for a predetermined number of operating cycles so as to try and obtain a complete filling of the seats 18 of the carriages 16; the control unit 26 diagnoses a malfunction if a seat 18 is still empty (namely, without the respective support body 1 or the respective electronic circuit 10) after a predetermined number of operating cycles, during which the carriage 16 remains still in a loading station S1 or S4 trying to complete the filling of the seats 18 of the carriage 16 with every operating cycle.

In other words, the control unit 24 holds, at the beginning of each operating cycle, a carriage 16 in a loading station S1 or S4, if, at the end of the preceding operating cycle, at least one seat 18 of the carriage 16 is still empty (namely, without the respective support body 1 or the respective electronic circuit 10), and inserts, during each operating cycle, the missing support bodies 1 or electronic circuits 10 into the seats 18 while the carriage 16 is standing still in the loading station S1 or S4, if, at the end of the preceding operating cycle, at least one seat 18 of the carriage 16 is still empty (namely, without the respective support body 1 or the respective electronic circuit 10).

In this way, it is advantageously possible to avoid rejecting an (incomplete) group of support bodies 1 in the same carriage 16 when all seats 18 of the carriage 16 fail to be filled (since all seats 18 of a carriage 16 are always filled by having the carriage 16 wait in the loading station S1 or S4 until the filling is complete); in the specific case of the winding operation, drawbacks such as the undesired breaking of the wire 13 due to the lack of a support body 1 in one of the seats 18 of the carriage 16 are avoided.

Normally (namely, in the absence of problems), each carriage 16 should stop in any station S1-S7 of the processing path P for one single operating cycle.

According to a possible embodiment, if the control unit 26 stops a carriage 16 in a loading station S1 or S4 for more than one operating cycle due to an incomplete supply of components (the support bodies 1 or the electronic circuits 10), then the control unit 26 also keeps all the other carriages 16 still in the position in which they are for more than one operating cycle, since the carriages 16 need to always move together and in a synchronized manner along the processing path P. In other words, in this embodiment, it is not possible to keep only one carriage 16 still for more than one operating cycle, but all carriages 16 have to remain still, so that all carriages 16 always move together and in a synchronized manner along the processing path P. Indeed, in this embodiment, if the control unit 26 kept one single carriage 16 still in the loading station S1 or S4 due to an incomplete supply of components (the support bodies 1 or the electronic circuits 10), then the carriage 16 immediately upstream of the loading station S1 or S4 where the carriage 16 remains still could not access anyway the loading station S1 or S4 and this would have repercussions on all the other carriages 16, which would not have a place to go, if they moved; therefore, in this embodiment, it is useful for all carriages 16 to always move together and in a synchronized manner along the processing path P, since all carriages 16 switch their positions with every cycle.

According to a different embodiment, along the processing path P there is at least one parking device (namely, a store for the carriages 16), which allows the carriages 16 to leave the processing path P (namely, the annular guide 19) when, due to a temporary impediment, there is no possibility for the carriages 16 of moving on along the processing path P and, then, allows the carriages 16 to go back to the processing path P (namely, to the annular guide 19) when there is again the possibility for the carriages 16 of moving one along the processing path P. In this way, when a loading station S1 or S4 remains occupied by a carriage 16 that has not completed its filling in one single operating cycle, a carriage 16 can access a parking device in order to allow the other carriages 16 to move.

According to a further embodiment, the empty carriages 16 can also be stored and kept waiting in the return segment of the processing path P extending between the output station S2 and the loading station S1 (which serves as parking area), when a loading station S1 or S4 remains occupied by a carriage 16 that has not completed its filling in one single operating cycle.

According to a different embodiment which is not shown herein, the loading station S1 or the loading station S4 could comprise a conveyor similar to the main conveyor 15 and, hence, having a linear electric motor, which pushes carriages along a guide; or, according an embodiment which is not shown herein, downstream of the unloading station S2 there is a further conveyor similar to the main conveyor 15 and, hence, having a linear electric motor, which pushes carriages along a guide (in this case, the unloading station S2 of the main conveyor 15 becomes the loading station of the following conveyor). In these embodiments there are several conveyors, each having a linear electric motor, which pushes carriages along a guide, and arranged one after the other and these conveyors are connected to one another in series (the main conveyor 15 could be arranged in the middle of this series of conveyors); these conveyors connected in series all operate with the same logic disclosed above: a carriage of a conveyor remains still in a loading station of its own (which can be the unloading station of a preceding conveyor) until it receives all the elements to be expected based on its loading capacity. In the embodiment shown in the accompanying figures, the wire 13 is an electrically conductor wire, is externally insulated and is wound so as to form a coil 11, which creates a wound antenna for electromagnetic interactions that can be aimed at exchanging (transmitting) information or can be aimed at generating power through electromagnetic induction. According to a different embodiment, the wire 13 is an electrically conductor wire (and, hence, an electric current can flow through it, even though it has a low or very low intensity), but has a textile core (for example, made of cotton), which is caused to become a conductor, for instance through a doping with metal nanoparticles. According to a further embodiment, the wire 13 is not an electrically conductor wire, is of the textile kind and the coil 11 creates a wick (or the like) for an electronic cigarette.

The embodiments described herein can be combined with one another, without for this reason going beyond the scope of protection of the invention.

In the non-limiting embodiment described above, the article comprising the support body 1 and the transponder 9 is part of a disposable cartridge of an electronic cigarette, but the method described above can also be applied to the production of articles of any type (namely, of any product class). For example, the method described above can be applied to the production of articles for a machine, a plant, a construction, a product (for example, a payment means), for instance, but not exclusively, of the tobacco, pharmaceutical, food-related or entertainment industry; more in general, the method described above can be applied to the production of articles for applications of any type.

The embodiments described herein can be combined with one another, without for this reason going beyond the scope of protection of the invention.

The method disclosed above has numerous advantages.

First of all, the method disclosed above helps handle a failed supply of a component in a simple and effective manner, since, even in case of a failed supply of a component, it avoids the rejection of non-defective components and maximizes (as much as possible) productivity.

Furthermore, the method described above is relatively simple and economic to be implemented.

### LIST OF THE REFERENCE NUMBERS OF THE FIGURES

- 1: article
- 9: transponder
- 10: electronic circuit
- 11: coil
- 13: wire
- 14: automatic machine
- 15: main conveyor
- 16: carriages
- 17: support plate
- 18: seats
- 19: annular guide
- 20: slides
- 21: linear electric motor
- 22: annular stator
- 23: movable slider
- 24: supplying device
- 25: supplying device
- 26: control unit
- P: processing path
- S1: input station
- S2: output station
- S3: application station
- S4: feeding station
- S5: winding station
- S6: winding station
- S7: welding station

## Claims

1. A method for the production of an article in an automatic machine (14) operating by means of a succession of operating cycles; the production method comprises the steps of:
moving, at the beginning of a first operating cycle, a carriage (16) provided with at least one seat (18) configured to accommodate a first component (1) by means of a main conveyor (15) and along a processing path (P);
stopping, during the first operating cycle, the carriage (16) in a first loading station (S1); and
inserting, during the first operating cycle, the first component (1) into the seat (18) while the carriage (16) is standing still in the first loading station (S1);
the production method is **characterized in that** it comprises the steps of:
checking, at the end of the first operating cycle, whether the first component (1) is actually present in the seat (18);
moving, at the beginning of a second operating cycle immediately following the first operating cycle, the carriage (16) from the first loading station (S1) to the following station (S3), only if, at the end of the first operating cycle, the first component (1) is actually present in the seat (18);
keeping, at the beginning of the second operating cycle, the carriage (16) in the first loading station (S1), if, at the end of the first operating cycle, the seat (18) still lacks the first component (1); and
inserting, during the second operating cycle, the first component (1) into the seat (18) while the carriage (16) is standing still in the first loading station (S1), if, at the end of the first operating cycle, the seat (18) still lacks the first component (1).

2. The production method according to claim 1 and comprising the steps of:
keeping, at the beginning of each operating cycle, the seat (18) in the first loading station (S1), if, at the end of the preceding operating cycle, the seat (18) still lacks the first component (1); and
inserting, during each operating cycle, the first component (1) into the seat (18) while the carriage (16) is standing still in the first loading station (S1), if, at the end of the preceding operating cycle, the seat (18) lacks the first component (1).

3. The production method according to claim 2 and comprising the step of diagnosing a malfunction, if the seat (18) still lacks the first component (1) after a predetermined number of operating cycles during which the carriage (16) stands still in the first loading station (S1).

4. The production method according to claim 1, 2 or 3, wherein:
the carriage (16) is provided with at least two twin seats (18);
in the first loading station (S1), two first components (1) are inserted into the two seats (18) of the carriage (16); and
at the beginning of the second operating cycle, the seat (18) is moved from the first loading station (S1) to the following station (S3), only if, at the end of the first operating cycle, all first components (1) are actually present in the respective seats (18).

5. The production method according to claim 4, wherein the first loading station (S1) has a supplying device (24) configured to supply one single component (1) at a time and the carriage (16) is moved so as to align, one after the other, each seat (18) with the supplying device (24), thus allowing the supplying (24) to insert, one after the other, the components (1) into the respective seats (18) of the carriage (16).

6. The production method according to one of the claims from 1 to 5 and comprising the steps of:
stopping, at the beginning of an operating cycle, the carriage (16) in a second loading station (S4);
inserting, during an operating cycle, a second component (10) into the seat (18) while the carriage (16) is standing still in the second loading station (S4);
checking, at the end of an operating cycle, whether the second component (10) is actually present in the seat (18);
moving, at the beginning of an operating cycle, the carriage (16) from the second loading station (S4) to a following station (S5, S6), only if, at the end of the preceding operating cycle, the second component (10) is actually present in the seat (18);
keeping, at the beginning of an operating cycle, the seat (18) in the second loading station (S4), if, at the end of a preceding operating cycle, the seat (18) still lacks the second component (10); and
inserting, during an operating cycle, the second component (10) into the seat (18) while the carriage (16) is standing still in the second loading station (S4), if, at the end of a preceding operating cycle, the seat (18) still lacks the second component (1).

7. The production method according to one of the claims from 1 to 6 and comprising the step of moving, along the processing path (P) and in a synchronized manner, a plurality of carriages (16) so that, at the beginning of each operating cycle, either all carriages (16) move from a current station (S1-S7) to a following station (S1-S7) or all carriages (16) stand still in the current station (S1-S7).

8. The production method according to one of the claims from 1 to 7 and comprising the step of coupling, in at least one winding station (S5, S6) arranged along the processing path (P) downstream of the first loading station (S1), a wire (13) around the first component (1) carried by the carriage (16) so as to create a corresponding coil (11).

9. The production method according to claim 8 and comprising the steps of:
stopping, at the beginning of an operating cycle, the carriage (16) in a second loading station (S4); and
inserting, during an operating cycle and while the carriage (16) is standing still in the second loading station (S4), an integrated circuit (10), which is provided with two electrical contacts (12) and is coupled to the first component (1), into the seat (18).

10. The method according to one of the claims from 1 to 9, wherein the main conveyor (15) comprises:
an annular guide (19);
a slide (20), which is coupled to the guide (19) so as to freely slide along the guide (19) and supports the carriage (15); and
a linear electric motor (21), which moves the slide (20) and is provided with an annular stator (22), which is arranged in a fixed position along the guide (19), and with a movable slider (23), which is electromagnetically coupled to the stator (22) so as to receive, from the stator (22), a driving force and is rigidly connected to the slide (20).

11. An automatic machine (14) for the production of an article (1) and operating by means of a succession of operating cycles; the automatic machine (14) comprises:
a main conveyor (15) configured to move, at the beginning of a first operating cycle and along a processing path (P), a carriage (16) provided with at least one seat (18) configured to accommodate a first component (1) and to move, at the beginning of a second operating cycle immediately following the first operating cycle, the carriage (16) from the first loading station (S1) to a following station (S3);
a first loading station (S1), in which the carriage (16) is stopped during the first operating cycle;
a supplying device (24) configured to insert, during the first operating cycle, the first component (1) into the seat (18) while the carriage (16) is standing still in the first loading station (S1); and
a control unit (24)
the automatic machine (14) is **characterized in that** the control unit (24) is configured to:
checking, at the end of the first operating cycle, whether the first component (1) is actually present in the seat (18);
move, at the beginning of the second operating cycle, the carriage (16) from the first loading station (S1) to the following station (S3), only if, at the end of the first operating cycle, the first component (1) is actually present in the seat (18);
keep, at the beginning of the second operating cycle, the carriage (16) in the first loading station (S1), if, at the end of the first operating cycle, the seat (18) still lacks the component (1); and
insert, during the second operating cycle, the first component (1) into the seat (18) while the carriage (16) is standing still in the first loading station (S1), if, at the end of the first operating cycle, the seat (18) still lacks the component (1).

## Patentansprüche

1. Verfahren zur Produktion eines Artikels in einer automatischen Maschine (14), die mittels einer Folge von Betriebszyklen arbeitet; wobei das Produktionsverfahren die Schritte umfasst:
Bewegen, zu Beginn eines ersten Arbeitszyklus, eines Schlittens (16), der mit mindestens einer Aufnahme (18) versehen ist, die konfiguriert ist, eine erste Komponente (1) aufzunehmen, mittels eines Hauptförderers (15) und entlang eines Verarbeitungspfads (P);
Stoppen, während des ersten Arbeitszyklus, des Schlittens (16) in einer ersten Beladungsstation (S1) und
Einsetzen, während des ersten Arbeitszyklus, der ersten Komponente (1) in die Aufnahme (18), während der Schlitten (16) in der ersten Beladungsstation (S1) stillsteht;
wobei das Produktionsverfahren **dadurch gekennzeichnet ist, dass** es die Schritte umfasst:
Prüfen, am Ende des ersten Arbeitszyklus, ob die erste Komponente (1) in der Aufnahme (18) tatsächlich vorhanden ist;
Bewegen, zu Beginn eines zweiten Arbeitszyklus, der dem ersten Arbeitszyklus unmittelbar folgt, des Schlittens (16) von der ersten Beladungsstation (S1) zu der folgenden Station (S3) lediglich dann, falls am Ende des ersten Arbeitszyklus die erste Komponente (1) in der Aufnahme (18) tatsächlich vorhanden ist;
Halten, zu Beginn des zweiten Arbeitszyklus, des Schlittens (16) in der ersten Beladungsstation (S1), falls an dem Ende des ersten Arbeitszyklus die Aufnahme (18) die erste Komponente (1) immer noch nicht aufweist; und
Einsetzen, während des zweiten Arbeitszyklus, der ersten Komponente (1) in die Aufnahme (18), während der Schlitten (16) in der ersten Beladungsstation (S1) stillsteht, falls an dem Ende des ersten Arbeitszyklus die Aufnahme (18) die erste Komponente (1) immer noch nicht aufweist.

2. Produktionsverfahren nach Anspruch 1 und umfassend die folgenden Schritte:
Halten, zu Beginn jedes Arbeitszyklus, der Aufnahme (18) in der ersten Beladungsstation (S1), falls an dem Ende des vorausgehenden Arbeitszyklus die Aufnahme (18) die erste Komponente (1) immer noch nicht aufweist; und
Einsetzen, während jedes Arbeitszyklus, der ersten Komponente (1) in die Aufnahme (18), während der Schlitten (16) in der ersten Beladungsstation (S1) stillsteht, falls an dem Ende des vorausgehenden Arbeitszyklus die Aufnahme (18) die erste Komponente (1) nicht aufweist.

3. Produktionsverfahren nach Anspruch 2 und umfassend den Schritt des Diagnostizierens einer Fehlfunktion, falls die Aufnahme (18) die erste Komponente (1) nach einer vorbestimmten Anzahl Betriebszyklen, während derer der Schlitten (16) in der ersten Beladungsstation (S1) stillsteht, immer noch nicht aufweist.

4. Produktionsverfahren nach Anspruch 1, 2 oder 3, wobei
der Schlitten (16) mit mindestens zwei Partneraufnahmen (18) versehen ist;
in der ersten Beladungsstation (S1) zwei erste Komponenten (1) in die zwei Aufnahmen (18) des Schlittens (16) eingesetzt werden; und
zu Beginn des zweiten Arbeitszyklus die Aufnahme (18) lediglich dann von der ersten Beladungsstation (S1) zur folgenden Station (S3) bewegt wird, falls an dem Ende des ersten Arbeitszyklus alle ersten Komponenten (1) in den jeweiligen Aufnahmen (18) tatsächlich vorhanden sind.

5. Produktionsverfahren nach Anspruch 4, wobei die erste Beladungsstation (S1) eine Zufuhrvorrichtung (24) aufweist, die konfiguriert ist, jeweils eine einzelne Komponente (1) zuzuführen, und der Schlitten (16) bewegt wird, um nacheinander jede Aufnahme (18) auf die Zufuhrvorrichtung (24) auszurichten, wodurch ermöglicht wird, dass die Zufuhrvorrichtung (24) die Komponenten (1) nacheinander in die jeweiligen Aufnahmen (18) des Schlittens (16) einsetzt.

6. Produktionsverfahren nach einem der Ansprüche 1 bis 5 und umfassend die Schritte:
Stoppen, zu Beginn eines Arbeitszyklus, des Schlittens (16) in einer zweiten Beladungsstation (S4);
Einsetzen, während eines Arbeitszyklus, einer zweiten Komponente (10) in die Aufnahme (18), während der Schlitten (16) in der zweiten Beladungsstation (S4) stillsteht;
Prüfen, am Ende eines Arbeitszyklus, ob die zweite Komponente (10) in der Aufnahme (18) tatsächlich vorhanden ist;
Bewegen, zu Beginn eines Arbeitszyklus, des Schlittens (16) von der zweiten Beladungsstation (S4) zu einer folgenden Station (S5, S6), lediglich dann, falls am Ende des vorausgehenden Arbeitszyklus die zweite Komponente (10) in der Aufnahme (18) tatsächlich vorhanden ist;
Halten, zu Beginn eines Arbeitszyklus, der Aufnahme (18) in der zweiten Beladungsstation (S4), falls an dem Ende eines vorausgehenden Arbeitszyklus die Aufnahme (18) die zweite Komponente (10) immer noch nicht aufweist; und
Einsetzen, während eines Arbeitszyklus, der zweiten Komponente (10) in die Aufnahme (18), während der Schlitten (16) in der zweiten Beladungsstation (S4) stillsteht, falls an dem Ende eines vorausgehenden Arbeitszyklus die Aufnahme (18) die zweite Komponente (1) immer noch nicht aufweist.

7. Produktionsverfahren nach einem der Ansprüche 1 bis 6 und umfassend den Schritt des Bewegens, entlang des Verarbeitungspfads (P) und in einer synchronisierten Weise, mehrerer Schlitten (16), derart, dass zu Beginn jedes Arbeitszyklus entweder alle Schlitten (16) sich von einer aktuellen Station (S1-S7) zu einer folgenden Station (S1-S7) bewegen oder alle Schlitten (16) in der aktuellen Station (S1-S7) stillstehen.

8. Produktionsverfahren nach einem der Ansprüche 1 bis 7 und umfassend den Schritt des Koppelns in mindestens einer Wicklungsstation (S5, S6), die entlang des Verarbeitungspfads (P) stromabwärts der ersten Beladungsstation (S1) angeordnet ist, eines Drahts (13) um die erste Komponente (1), die durch den Schlitten (16) getragen wird, um eine entsprechende Spule (11) zu erzeugen.

9. Produktionsverfahren nach Anspruch 8 und umfassend die Schritte:
Stoppen, zu Beginn eines Arbeitszyklus, des Schlittens (16) in einer zweiten Beladungsstation (S4); und
Einsetzen, während eines Arbeitszyklus und während der Schlitten (16) in der zweiten Beladungsstation (S4) stillsteht, einer integrierten Schaltung (10), die mit zwei elektrischen Kontakten (12) versehen ist und an die erste Komponente (1) gekoppelt wird, in die Aufnahme (18).

10. Verfahren nach einem der Ansprüche 1 bis 9, wobei der Hauptförderer (15) umfasst:
eine ringförmige Führung (19);
einen Gleiter (20), der an die Führung (19) gekoppelt ist, um entlang der Führung (19) frei zu gleiten, und den Schlitten (16) trägt; und
einen Linearelektromotor (21), der den Gleiter (20) bewegt und mit einem ringförmigen Stator (22), der bei einer festen Position entlang der Führung (19) angeordnet ist, und mit einem beweglichen Läufer (23), der an den Stator (22) elektromagnetisch gekoppelt ist, um vom Stator (22) eine Antriebskraft zu empfangen, und mit dem Gleiter (20) starr verbunden ist, versehen ist.

11. Automatische Maschine (14) zur Produktion eines Artikels (1), der mittels einer Folge von Betriebszyklen arbeitet; wobei die automatische Maschine (14) umfasst:
einen Hauptförderer (15), der konfiguriert ist, zu Beginn eines ersten Arbeitszyklus und entlang eines Verarbeitungspfads (P) einen Schlitten (16) zu bewegen, der mit mindestens einer Aufnahme (18) versehen ist, die konfiguriert ist, eine erste Komponente (1) aufzunehmen, und zu Beginn eines zweiten Arbeitszyklus, der dem ersten Arbeitszyklus unmittelbar folgt, den Schlitten (16) von der ersten Beladungsstation (S1) zu einer folgenden Station (S3) zu bewegen;
eine erste Beladungsstation (S1), in der der Schlitten (16) während des ersten Arbeitszyklus gestoppt wird;
eine Zufuhrvorrichtung (24), die konfiguriert ist, während des ersten Arbeitszyklus die erste Komponente (1) in die Aufnahme (18) einzusetzen, während der Schlitten (16) in der ersten Beladungsstation (S1) stillsteht; und
eine Steuereinheit (24),
wobei die automatische Maschine (14) **dadurch gekennzeichnet ist, dass** die Steuereinheit (24) konfiguriert ist, um:
an dem Ende des ersten Arbeitszyklus zu überprüfen, ob die erste Komponente (1) in der Aufnahme (18) tatsächlich vorhanden ist;
zu Beginn des zweiten Arbeitszyklus den Schlitten (16) von der ersten Beladungsstation (S1) zur folgenden Station (S3) lediglich dann zu bewegen, falls an dem Ende des ersten Arbeitszyklus die erste Komponente (1) in der Aufnahme (18) tatsächlich vorhanden ist;
zu Beginn des zweiten Arbeitszyklus den Schlitten (16) in der ersten Beladungsstation (S1) zu halten, falls an dem Ende des ersten Arbeitszyklus die Aufnahme (18) die Komponente (1) immer noch nicht aufweist; und
während des zweiten Arbeitszyklus die erste Komponente (1) in die Aufnahme (18) einzusetzen, während der Schlitten (16) in der ersten Beladungsstation (S1) stillsteht, falls am Ende des ersten Arbeitszyklus die Aufnahme (18) die Komponente (1) immer noch nicht aufweist.

## Revendications

1. Méthode pour la production d'un article dans une machine automatique (14) fonctionnant au moyen d'une succession de cycles de fonctionnement ; la méthode de production comprend les étapes consistant à : déplacer, au début d'un premier cycle de fonctionnement, un chariot (16) pourvu d'au moins un siège (18) configuré pour recevoir un premier élément (1) au moyen d'un transporteur principal (15) et le long d'un chemin de traitement (P) ;
arrêter, durant le premier cycle de fonctionnement, le chariot (16) dans une première station de chargement (S1) ; et
insérer, durant le premier cycle de fonctionnement, le premier élément (1) dans le siège (18) tandis que le chariot (16) ne bouge pas dans la première station de chargement (S1) ;
la méthode de production est **caractérisée en ce qu'**elle comprend les étapes consistant à :
vérifier, à la fin du premier cycle de fonctionnement, si le premier élément (1) est effectivement présent dans le siège (18) ;
déplacer, au début d'un second cycle de fonctionnement qui suit immédiatement le premier cycle de fonctionnement, le chariot (16) depuis la première station de chargement (S1) jusqu'à la station (S3) suivante, seulement si, à la fin du premier cycle de fonctionnement, le premier élément (1) est effectivement présent dans le siège (18) ;
maintenir, au début du second cycle de fonctionnement, le chariot (16) dans la première station de chargement (S1), si, à la fin du premier cycle de fonctionnement, le premier élément (1) manque encore dans le siège (18) ; et
insérer, durant le second cycle de fonctionnement, le premier élément (1) dans le siège (18) tandis que le chariot (16) ne bouge pas dans la première station de chargement (S1), si, à la fin du premier cycle de fonctionnement, le premier élément (1) manque encore dans le siège (18).

2. Méthode de production selon la revendication 1 et comprenant les étapes consistant à :
maintenir, au début de chaque cycle de fonctionnement, le siège (18) dans la première station de chargement (S1), si, à la fin du cycle de fonctionnement précédent, le premier élément (1) manque encore dans le siège (18) ; et
insérer, durant chaque cycle de fonctionnement, le premier élément (1) dans le siège (18) tandis que le chariot (16) ne bouge pas dans la première station de chargement (S1), si, à la fin du cycle de fonctionnement précédent, le premier élément (1) manque dans le siège (18).

3. Méthode de production selon la revendication 2 et comprenant l'étape consistant à diagnostiquer un dysfonctionnement, si le premier élément (1) manque encore dans le siège (18) après un nombre prédéterminé de cycles de fonctionnement durant lesquels le chariot (16) ne bouge pas dans la première station de chargement (S1).

4. Méthode de production selon la revendication 1, 2 ou 3, dans laquelle :
le chariot (16) est pourvu d'au moins deux sièges (18) jumeaux ;
dans la première station de chargement (S1), deux premiers éléments (1) sont insérés dans les deux sièges (18) du chariot (16) ; et
au début du second cycle de fonctionnement, le siège (18) est déplacé depuis la première station de chargement (S1) jusqu'à la station (S3) suivante, seulement si, à la fin du premier cycle de fonctionnement, tous les premiers éléments (1) sont effectivement présents dans les sièges (18) respectifs.

5. Méthode de production selon la revendication 4, dans laquelle la première station de chargement (S1) a un dispositif de fourniture (24) configuré pour fournir un seul élément (1) à la fois et le chariot (16) est déplacé de manière à aligner, l'un après l'autre, chaque siège (18) sur le dispositif de fourniture (24), permettant ainsi au dispositif de fourniture (24) d'insérer, l'un après l'autre, les éléments (1) dans les sièges (18) respectifs du chariot (16).

6. Méthode de production selon l'une des revendications 1 à 5 et comprenant les étapes consistant à :
arrêter, au début d'un cycle de fonctionnement, le chariot (16) dans une seconde station de chargement (S4) ;
insérer, durant un cycle de fonctionnement, un second élément (10) dans le siège (18) tandis que le chariot (16) ne bouge pas dans la seconde station de chargement (S4) ;
vérifier, à la fin d'un cycle de fonctionnement, si le second élément (10) est effectivement présent dans le siège (18) ;
déplacer, au début d'un cycle de fonctionnement, le chariot (16) depuis la seconde station de chargement (S4) jusqu'à une station (S5, S6) suivante, seulement si, à la fin du cycle de fonctionnement précédent, le second élément (10) est effectivement présent dans le siège (18) ;
maintenir, au début d'un cycle de fonctionnement, le siège (18) dans la seconde station de chargement (S4), si, à la fin d'un cycle de fonctionnement précédent, le second élément (10) manque encore dans le siège (18) ; et
insérer, durant un cycle de fonctionnement, le second élément (10) dans le siège (18) tandis que le chariot (16) ne bouge pas dans la seconde station de chargement (S4), si, à la fin d'un cycle de fonctionnement précédent, le second élément (1) manque encore dans le siège (18).

7. Méthode de production selon l'une des revendications 1 à 6 et comprenant l'étape consistant à déplacer, le long du chemin de traitement (P) et de manière synchronisée, une pluralité de chariots (16) de façon à ce que, au début de chaque cycle de fonctionnement, soit tous les chariots (16)
se déplacent depuis une station (S1 à S7) courante jusqu'à une station (S1 à S7) suivante, soit tous les chariots (16) ne bougent pas dans la station (S1 à S7) courante.

8. Méthode de production selon l'une des revendications 1 à 7 et comprenant l'étape consistant à coupler, dans au moins une station d'enroulement (S5, S6) agencée le long du chemin de traitement (P) en aval de la première station de chargement (S1), un fil (13) autour du premier élément (1) porté par le chariot (16) de manière à créer une bobine (11) correspondante.

9. Méthode de production selon la revendication 8 et comprenant les étapes consistant à :
arrêter, au début d'un cycle de fonctionnement, le chariot (16) dans une seconde station de chargement (S4) ; et
insérer, durant un cycle de fonctionnement et tandis que le chariot (16) ne bouge pas dans la seconde station de chargement (S4), un circuit intégré (10), qui est pourvu de deux contacts électriques (12) et est couplé au premier élément (1), dans le siège (18).

10. Méthode selon l'une des revendications 1 à 9, dans laquelle le transporteur principal (15) comprend :
un guide (19) annulaire ;
un coulisseau (20), qui est accouplé au guide (19) de manière à coulisser librement le long du guide (19) et supporte le chariot (16) ; et
un moteur électrique linéaire (21), qui déplace le coulisseau (20) et est pourvu d'un stator (22) annulaire, qui est agencé dans une position fixe le long du guide (19), et d'un curseur mobile (23), qui est couplé électromagnétiquement au stator (22) de manière à recevoir, à partir du stator (22), une force d'entraînement et est relié rigidement au coulisseau (20) .

11. Machine automatique (14) pour la production d'un article (1) et fonctionnant au moyen d'une succession de cycles de fonctionnement ; la machine automatique (14) comprend :
un transporteur principal (15) configuré pour déplacer, au début d'un premier cycle de fonctionnement et le long d'un chemin de traitement (P), un chariot (16) pourvu d'au moins un siège (18) configuré pour recevoir un premier élément (1) et pour déplacer, au début d'un second cycle de fonctionnement qui suit immédiatement le premier cycle de fonctionnement, le chariot (16) depuis la première station de chargement (S1) jusqu'à une station (S3) suivante ;
une première station de chargement (S1), dans laquelle le chariot (16) est arrêté durant le premier cycle de fonctionnement ;
un dispositif de fourniture (24) configuré pour insérer, durant le premier cycle de fonctionnement, le premier élément (1) dans le siège (18) tandis que le chariot (16) ne bouge pas dans la première station de chargement (S1) ; et
une unité de commande (24)
la machine automatique (14) est **caractérisée en ce que** l'unité de commande (24) est configurée pour :
vérifier, à la fin du premier cycle de fonctionnement, si le premier élément (1) est effectivement présent dans le siège (18) ;
déplacer, au début du second cycle de fonctionnement, le chariot (16) depuis la première station de chargement (S1) jusqu'à la station (S3) suivante, seulement si, à la fin du premier cycle de fonctionnement, le premier élément (1) est effectivement présent dans le siège (18) ;
maintenir, au début du second cycle de fonctionnement, le chariot (16) dans la première station de chargement (S1), si, à la fin du premier cycle de fonctionnement, l'élément (1) manque encore dans le siège (18) ; et
insérer, durant le second cycle de fonctionnement, le premier élément (1) dans le siège (18) tandis que le chariot (16) ne bouge pas dans la première station de chargement (S1), si, à la fin du premier cycle de fonctionnement, l'élément (1) manque encore dans le siège (18).
